# EUROPEAN PATENT SPECIFICATION

(11) **EP 4 046 839 B1**
(45) Date of publication and mention of the grant of the patent: **16.10.2024**
(21) Application number: 22154003.2
(22) Date of filing: 28.01.2022
(51) Int. Cl.: B60J 3/02, B60J 3/04

(54) **REDUCING POWER USAGE IN A VIRTUAL VISOR**
REDUZIERUNG DES ENERGIEVERBRAUCHS IN EINEM VIRTUELLEN VISOR
RÉDUCTION DE LA CONSOMMATION ÉLECTRIQUE DANS UN VISEUR VIRTUEL

(30) Priority: 22.02.2021 US 202117181237
(43) Date of publication of application: 24.08.2022
(73) Proprietor: Robert Bosch GmbH, 70442 Stuttgart (DE)
(72) Inventor: Wisely Babu, Benzun Pious, San Jose, CA 95131 (US); Huang, Xinyu, Cupertino, CA 95014 (US); Ren, Liu, Saratoga, CA 95070 (US)

(56) References cited:
- WO-A1-2019/184917
- CN-A- 111 746 238
- DE-A1- 102011 016 652
- US-A1- 2010 094 501
- US-A1- 2018 017 791
- US-A1- 2019 096 340
- US-B2- 11 604 394

## Description

### TECHNICAL FIELD

The present disclosure relates to reducing power usage in a virtual visor.

### BACKGROUND

Automotive vehicles are typically equipped with a visor that can fold down and block the sun from shining directly into the driver's eyes. However, the visor is not transparent and thus blocks the field of view for the driver, which can be dangerous. Virtual visors have been developed that use a transparent display that is electronically controlled to darken only the areas that is directly between the driver's eyes and the incoming direct sunlight. This blocks out the direct sunlight from the driver's eyes while leaving other regions of the virtual visor transparent to maintain visibility through the virtual visor.

CN 111 746 238 A provides an automatic dimming sun visor having a vanity mirror function, which can adjust different luminous fluxes of different regions according to the positions of the eyes of a driver when used for the sun visor function, and can be used for a vanity mirror when used for the mirror function.

### SUMMARY

According to the present invention, a system for reducing power consumption of a virtual visor within a vehicle is provided as defined by independent claim 1. The system comprises a camera configured to capture images of a face of a driver; a visor screen having a plurality of liquid crystal display (LCD) pixels, each LCD pixel configured to (i) in an opaque state, block light from passing through a corresponding area of the visor screen, and (ii) in a transparent state, allow light to pass through the corresponding area of the visor screen; one or more monitors configured to monitor an environment inside or outside of the vehicle and output a trigger signal indicating a reduced need for the LCD pixels to be in the opaque state based on the monitored environment; and a processor configured to: process the captured images and select a group of the LCD pixels to transition between the transparent state and the opaque state based on the processed captured images, and in response to the trigger signal being output by the one or more sensors, cease the processing of the captured images and maintain the LCD pixels in the transparent state. The camera is further configured to detect an orientation of eyes of the driver, wherein the processor is further configured to select which group of the LCD pixels to transition to the opaque state based on the detected orientation of the eyes. When it is determined that the driver is wearing sunglasses, the trigger signal is provided to indicate the use of opaque areas on the visor screen is unnecessary.

According to the present invention, a method of controlling a virtual visor of a vehicle is provided as defined by independent claim 7. The method comprises capturing images of a face of a driver from a camera; performing facial recognition on the captured images to determine a location and an orientation of eyes of the driver; transitioning a group of LCD pixels of the virtual visor from a transparent state to an opaque state based on the determined location of the eyes to block at least some sunlight from traveling into the eyes; monitoring an environment inside or outside of the vehicle via one or more sensors; receiving a trigger signal based on the monitored environment that indicates a reduced need for the LCD pixels to be in the opaque state; and disabling the step of performing facial recognition in response to receiving the trigger signal. The group of the LCD pixels to transition to the opaque state is selected further based on the detected orientation of the eyes. When it is determined that the driver is wearing sunglasses, the trigger signal is provided to indicate the use of opaque areas on the visor screen is unnecessary.

According to the present invention, a non-transitory computer-readable medium, as defined by independent claim 13, configured to store instructions that, when executed by at least one processor, cause the at least one processor to perform operations comprising: operate a camera to capture images of a face of a driver of a vehicle; process the captured images to determine a location and an orientation of eyes of the driver; based on the determined location of the eyes, command a group of LCD pixels of a virtual visor screen to switch between (i) a transparent state to allow light to transmit through a corresponding area of the virtual visor screen, and (i) an opaque state to block light from transmitting through the corresponding area of the virtual visor screen; operate one or more sensors to monitor an environment inside or outside of the vehicle; and cease the processing of the captured images in response to the monitored environment indicating a reduced need for the LCD pixels to be in the opaque state. The group of the LCD pixels to transition to the opaque state is selected further based on the detected orientation of the eyes. When it is determined that the driver is wearing sunglasses, the trigger signal is provided to indicate the use of opaque areas on the visor screen is unnecessary.

### BRIEF DESCRIPTION OF THE DRAWINGS

Figure 1 is a perspective view of an interior cabin of an automotive vehicle, with certain portions removed or cut away, showing an exemplary embodiment of a virtual visor system.
Figure 2 is a schematic of virtual visor system according to an embodiment.
Figure 3A is a simplified block diagram of a portion of a screen of the virtual visor system with the entire portion in a transparent state, and Figure 3B shows the block diagram with a subset or area of the portion opaque to block at least some light from passing through the area.
Figures 4A and 4B show examples of front views of a driver taken by the camera of the virtual visor system.
Figure 5 is a flow diagram of various sensors or monitors and a control of the virtual visor system, according to an embodiment.
Figure 6 is a flow chart of an algorithm for disabling the virtual visor system, according to an embodiment.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

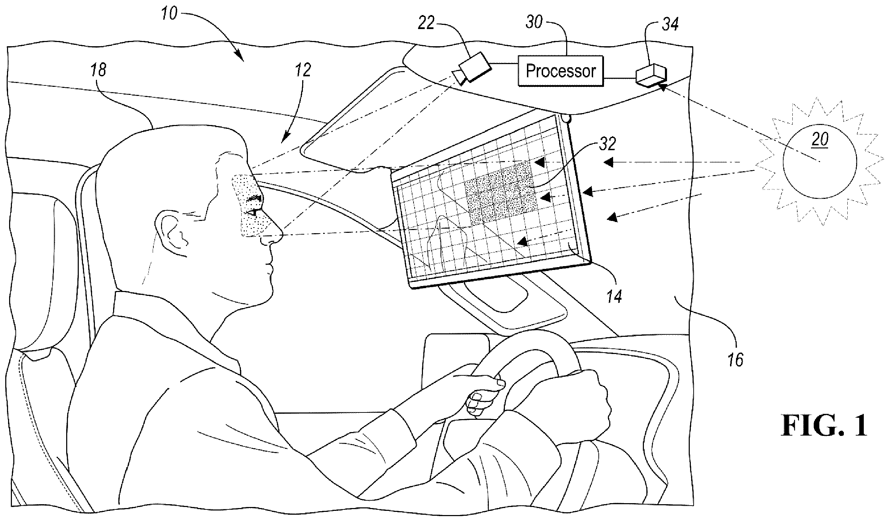

Figure 1 illustrates a virtual visor system 10 according to one embodiment of this disclosure. The virtual visor system 10 is shown configured for use in an automotive vehicle, such as a car, van, sports utility vehicle (SUV), truck, and the like, specifically within the cabin 12 of the vehicle. The virtual visor system 10 includes a screen 14, also referred to herein as a visor, visor screen, or display. The screen 14 may be mounted, attached or otherwise integrated with the vehicle so as to selectively cover or obstruct a portion of the windshield 16 or other window of the vehicle. In use, the driver 18 can flip, rotate, fold, swivel, slide, or otherwise move the screen 14 from an upward position (i.e., not covering the windshield 16) to a downward position (i.e., covering a portion of the windshield 16) which is shown in Figure 1. In the downward position, the screen 14 can be directly in between the eyes of the driver 16 and the source of the bright light, such as the sun 20.

In at least some embodiments, the screen 14 is mounted or otherwise attached to a surface within the cabin 12 in the field of view of the driver 18 or other passenger. Particular, in some embodiments, the screen 14 is mounted to the vehicle so as to be in the line of sight of the driver 18 sitting in the driver's seat and looking through the windshield 16. For example, in the case of a left-hand drive vehicle, the screen 14 may be mounted to the interior roof or headliner adjacent to the windshield 16 so as to cover and/or obstruct at least a portion of an upper-left (as viewed within the cabin 12) region of the windshield 16. Conversely, in the case of a right-hand drive vehicle, the screen 14 may be mounted to the interior roof or headliner adjacent to the windshield 16 so as to cover and/or obstruct at least a portion of an upper-right (as viewed within the cabin 12) region of the windshield 16. The screen 14 may also be mounted to any pillar of the vehicle to cover any window of the vehicle. In some embodiments, the screen is integrated within the glass of the windshield 16 or other window of the vehicle.

The screen 14 can also be automatically controlled such that a first portion of the visor is transparent and a second portion of the visor is opaque or non-transparent. In embodiments, the screen 14 may be a liquid crystal display (LCD) screen. Individual pixels or regions within the screen 14 that are aligned between the sunlight and the driver's eyes can be commanded to be opaque to block the sunlight for the driver's eyes, while other regions of the screen 14 not aligned between the sunlight and the driver's eyes may be transparent such that the field of view is maintained. In short, only a portion of the screen 14 may be commanded to be opaque, while the remainder of the screen 14 is commanded to be translucent.

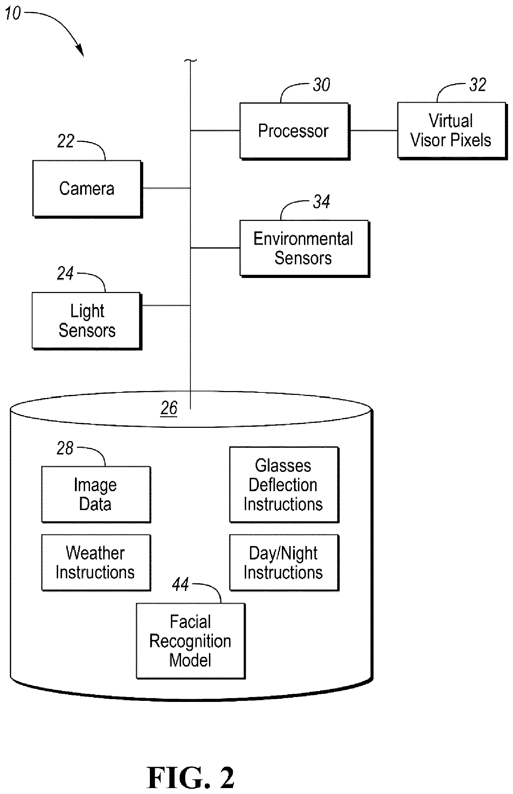

To do so, the virtual visor system 10 includes an illumination sensor, such as a camera 22, as shown in Figures 1-2. The camera 22 or other illumination sensor 24 is configured to detect an illumination level of at least one location of interest within the cabin 12 of the vehicle. Particularly, in at least one embodiment, the camera 22 is mounted in the vehicle at a location which has a clear view of the face of the driver 18 so as to detect an illumination level on the face of the driver 18. In one embodiment, the camera 22 is mounted to or otherwise integrated with the left or right "A" pillar of the vehicle. In another embodiment, the camera 22 is mounted to or otherwise integrated with the dash or steering wheel. In a further embodiment, the camera 22 is mounted to the interior side of the roof of the vehicle, adjacent to the top of the windshield 16. The camera 22 is configured to continuously or periodically capture images of the face of the driver 18 and output the captured image frames. The captured image frames can be saved on memory 26 as image data 28.

In an embodiment, the illumination sensor 24 is an incident light sensor. The incident light sensor may be mounted or otherwise attached inside or outside the cabin at a position where it can detect the ambient or incident light. The incident light sensor can detect and measure both the intensity and the direction of ambient light. In embodiments, the incident light sensor utilizes collimators or polarizers to determine the direction of the incident light source relative to the light sensor. In embodiments, the incident light sensor has external directional components used for calibration based on the relative position of the reference light source. Collimators, in connection with position sensitive light detectors, are used to collect information on the amount of electric charge induced in one or more electrodes by a collimated light beam. The information from the electrodes is used to derive a direction of incidence of the light. In embodiments, the light sensor 18 implements light detectors distributed over a spherical (e.g., hemispherical) surface to determine the direction of incident light based on which light detectors are activated by the incident light. In embodiments, the incident light sensor uses polarization filters to uniquely polarize light from different directions to detect the direction of incident light based on the type of polarization detected. Alternatively, the incident light sensor includes dielectric layer (or stack of dielectric layers), a plurality of photo detectors coupled relative to the dielectric layer, and a plurality of stacks of opaque slats embedded within the dielectric layer, wherein the dielectric layer is substantially transparent to the incident light, the photo detectors detect the incident light through the dielectric layer, and the stacks of opaque slats are approximately parallel to an interface between the dielectric layer and the photo detectors. The stacks of opaque slats define light apertures between adjacent stacks of opaque slats, and at least some of the stacks of opaque slats are arranged at a non-zero angle relative to other stacks of the opaque slats. In short, the light sensor is configured to detect and measure both the intensity and the direction of incident light, and the light sensor may take one of a variety of structural forms to do so.

The virtual visor system 10 further includes a processor 30. The processor is communicatively coupled to the camera 22 or other light sensor 24, as well as the memory 26 and the screen 14. The processor 30 can include more than one processor. The processor 30 is programmed to execute instructions stored on the storage 26 for altering the translucence or opaqueness of the screen 14. In particular, the screen 14 may be a liquid crystal display (LCD) screen having a plurality of independently operable LCD pixels and/or LCD shutters arranged in a grid formation. Each pixel is configured to be selectively operated by the processor 30 in one of at least two optical states: (1) an opaque state, in which the respective pixel blocks light from passing through a respective area of the screen 14 and (2) a transparent state, in which the respective pixel allows light to pass through the respective area of the screen 14. It will be appreciated, however, that any number of intermediate optical states may also be possible. As the processor 30 acts in this fashion to control the screen 14, the processor 30 may also be referred to as a "controller," or may be connected to a separate controller that physically performs the action of controlling the pixels of the screen 14. Furthermore, the opaque state and the transparent state do not necessarily indicate a 100% opaque characteristic and a 100% transparent characteristic, respectively. Instead, the opaque state is simply one which blocks more light from passing through the respective area than does the transparent state. It will be appreciated that the screen 14 may instead utilize technology other the LCD pixels and a shutter screen may utilize any type of panel having shutter pixels that are electrically, magnetically, and/or mechanically controllable to adjust an optical transparency thereof. For example, the screen 14 may be include a grid of light emitting diodes (LED) that can be controlled to be off (e.g., transparent) and on (e.g., darkened color such as black).

If the screen 14 is an LCD screen operable by the processor 30, the screen 14 may operate as follows, according to various embodiments. The screen itself may comprise a thin layer of glass with liquid crystals, with a white illumination system is placed right behind the glass. Each single pixel may be composed by multiple (e.g., three) "subpixels", each one able to produce a different color, such as red, blue and green. When activated by an electric current, the subpixels work as "shutters". Depending on the intensity of the current, pixels will become more or less "closed". This blocking - or partial blocking - takes place in a perpendicular manner to the passage of light. The mix of those three layers creates the actual final color visible on the screen 14. Likewise, if all three subpixels are "open" (or "not colored"), the backlight will then travel through the subpixels with no alteration. The result is then a transparent dot in the region of the pixel. So, in order for a region to be transparent, the LCD pixels in that area are energized.

The screen 14 may also be an organic light-emitting diode (OLED) screen operable by the processor 30. In such an embodiment, the screen may include two layers of glass on both sides of a set of addressable LEDs with an emissive layer and a conductive layer. Electrical impulses travel through the conductive layer and produce light at the emissive layer. So, in order for a region to be transparent, the OLED screen is simply not energized. However, OLEDs have a difficulty in creating dark (e.g., black) colors that may be beneficial to effectively block out direct sunlight.

It should be understood that the examples provided above regarding LCD and OLED screens are merely examples of transparent displays that can be used as the screen 14. Other available technologies can also be utilized as the screen 14. As controlled by the processor 30 and instructions stored in memory, utilizing any of the exemplary screen technologies described herein the screen is configured to alter between (1) an opaque state, in which regions of the screen are opaque to block out at least a portion of the sunlight, and (2) a transparent state, in which the regions allow light to pass through the respective area of the screen 14.

The processor 30 may include one or more integrated circuits that implement the functionality of a central processing unit (CPU), display controller, and/or graphics processing unit (GPU). In some examples, the processor 30 is a system on a chip (SoC) that integrates the functionality of the CPU and GPU. The SoC may optionally include other components such as, for example, the storage 26 into a single integrated device. In other examples, the CPU and GPU are connected to each other via a peripheral connection device such as PCI express or other suitable peripheral data connection. In one example, the CPU is a commercially available central processing device that implements an instruction set such as one of the x86, ARM, Power, or MIPS instruction set families. The processor may include one or more devices selected from microprocessors, microcontrollers, digital signal processors, microcomputers, central processing units, field programmable gate arrays, programmable logic devices, state machines, logic circuits, analog circuits, digital circuits, or any other devices that manipulate signals (analog or digital) based on computer-executable instructions residing in memory.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., a field programmable gate array ("FPGA") or an application specific integrated circuit ("ASIC"). Such a special purpose circuit may be referred to as a computer processor even if it is not a general-purpose processor.

Regardless of the specifics, during operation, the processor 30 executes stored program instructions that are retrieved from storage 26. The storage 26, when accessed by the processor 30, may be configured to enable execution of instructions to alter the translucence and/or opaqueness of one or more pixels 32 or regions of pixels 32 of the screen 14. The storage 26 may include a single memory device or a plurality of memory devices including, but not limited to, random access memory ("RAM"), volatile memory, non-volatile memory, static random-access memory ("SRAM"), dynamic random-access memory ("DRAM"), flash memory, cache memory, or any other device capable of storing information.. The non-volatile memory includes solid-state memories, such as NAND flash memory, magnetic and optical storage media, or any other suitable data storage device that retains data when the virtual visor system 10 is deactivated or loses electrical power. Programs residing in the non-volatile storage may include or be part of an operating system or an application, and may be compiled or interpreted from computer programs created using a variety of programming languages and/or technologies, including, without limitation, and either alone or in combination, Java, C, C++, C#, Objective C, Fortran, Pascal, Java Script, Python, Perl, and PL/SQL. The volatile memory includes static and dynamic random-access memory (RAM) that stores program instructions and data during operation of the virtual visor system 10.

As shown in Figures 1-2, the processor is also coupled to one or more environmental sensors 34. These environmental sensors 34 may include a variety of sensors configured to detect the current environment around the vehicle, such as amount of daylight, rain, and the like. The environmental sensors 34 can also pull time data from the vehicle to determine the current time of day. All of this data can be used to allow the processor 30 to make an informed decision about whether the conditions are right to de-power the entire virtual visor system 10 to save the relatively large amount of energy required to run such a system. For example, if it is determined to be night outside, the system 10 may not be required to be actively capturing images of the driver's face and surrounding light because a visor will not be necessary at this time; therefore the system 10 can turn into a low-power mode. The environmental sensors can therefore include an ambient light sensor or incident light sensor for determining the level of ambient light (e.g., to determine whether it is day or night based on the ambient light being below or above a threshold), a rain sensor that determines precipitation on the vehicle windshield (e.g., as part of a windshield activation system), and the like. Further detail regarding the application and use of such environmental sensors 34 in the control of the screen 14 is described later in this disclosure.

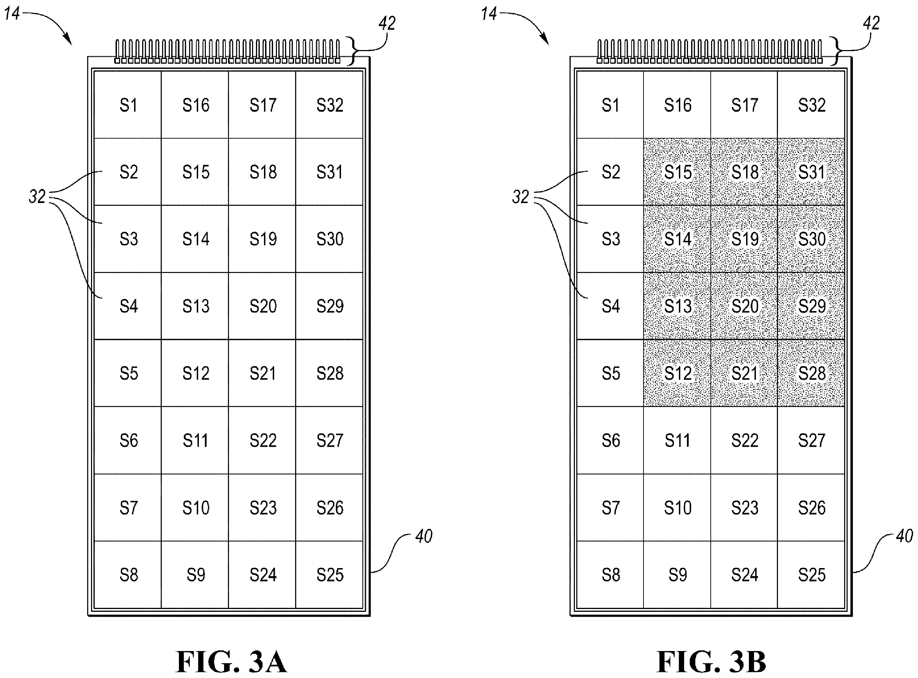

Figure 3A is a simplified block diagram of the screen 14 in a transparent state, and Figure 3B is a simplified block diagram of the screen 14 with a region of the screen 14 being in an opaque state. The screen 14 shown in these Figures may represent only a portion of the entire screen 14, and may not be to scale. For example, the screen 14 shown in these Figures has an array of thirty-two (32) pixels 32. However, in actuality, the entire screen 14 may include many more (e.g., hundreds or thousands) of pixels. The array of pixels 32 are arranged in a grid formation. In this embodiment, the grid of pixels includes pixels labeled S1-S32 arranged in four columns and eight rows (i.e., a 4x8 grid formation). However, it will be appreciated that the screen 14 may include any number of pixels 32 arranged in any suitable number of rows and columns. Additionally, the pixels can be arranged in non-rectangular and/or irregular formations having pixels of various shapes and sizes.

In at least one embodiment, the screen 14 includes a border or bezel 40 configured to surround and/or contain the array of pixels 32 (S1-S32) and to secure and/or hold the array of pixels 32 (S1-S32) together. While the screen 14 may be an LCD screen having these pixels, of course in other embodiments the pixels and/or type of light source may vary. The pixels 32 may be connected to driver circuits that control individual pixels and/or rows or columns of pixels 32.

The screen 14 may also include an electronic connector 42 configured to connect the controller or processor 30 to the individual pixels 32 and/or to the driver circuits, connect the driver circuits to the individual pixels, and/or connect the screen 14 to a power source. The controller or processor 30 as well as the driver circuits can be configured to provide appropriate voltages, currents, data, and/or other signals to the screen 14 via the connector 42 to operate the pixels 32 and control the optical states thereof (i.e., control whether each pixel is in the opaque state or the transparent state). In some embodiments, certain data (e.g., an identification of which pixels are opaque and which are transparent) or other signals are transmitted back to the processor or controller 30 from the pixels 32 via the connector 42.

Figure 3A shows the screen 14 with the entire array of pixels in the transparent state. Figure 3B shows the screen 14 with at least some of the pixels 32 (S12-S15, S18-S21 and S28-S31) in an opaque state. This opaque region of the screen 14 can correspond to the opaque region in Figure 1, such that a shadow is cast on the driver's face in the location of the driver's eyes. As explained above, this can be accomplished by controlling the pixels such that they are opaque or "closed," and thus at least partially blocking light from the ambient light source (e.g., the sun) from transmitting therethrough.

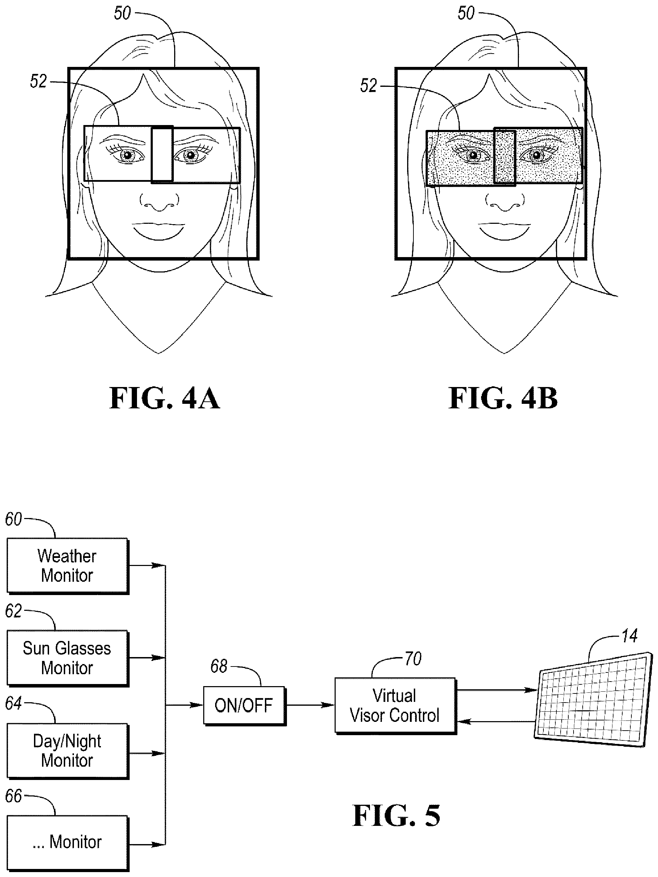

The controller or processor 30 selects the regions of the screen 14 to transition from the transparent mode to the opaque mode to cast a shadow on the driver's face that blocks the sunlight to the driver's eyes while maintaining a remainder of the screen 14 as transparent. The processor 30 can select which areas of the screen 14 to be opaque based on several inputs. In one embodiment, the image data 28 from the images captured by the camera 22 is analyzed for facial recognition, which can include face detection, face alignment, 3D reconstruction, and the like. For example, the storage 26 may include a facial recognition model 44, or other similar model. The facial recognition model can be, for example, OpenFace or similar available machine learning model. The model may be a pre-trained model from, for example, DLIB or OpenCV. The image can first be analyzed for detecting a face, shown in Figure 4A with a bounding box 50 placed about the face. The detected face can be transformed for a neural network. For example, in OpenFace, DLIB's real-time pose estimation is used with OpenCV's affine transformation to try to make the eyes and bottom lip appear in the same location on each image for cropping. A deep neural network can be used to represent (or embed) the face on a hypersphere, in which the face is generically represented. Clustering, similarity detection, and classification tasks can be implemented to complete the facial recognition task.

The facial recognition model can allow the associated processor to know the presence and location of the driver's eyes in the real-time captured image, shown within boundary box 52. The processor can be calibrated or pre-trained to associate a certain eye location within the image data with a corresponding pixel (or group of pixels) in the screen that, when turned opaque, will block out the direct sunlight from the driver's eyes. This calibration may also take into account the location of the sun. For example, the calibration of the virtual visor system 10 may receive, as inputs, the location of the light source (e.g., as detected from an externally-facing camera or other environmental sensor 34 such as an incident light sensor) and the location of the detected eyes of the driver, and may command a corresponding region of the screen 14 to transition to the opaque state such that the sunlight is blocked from traveling directly to the driver's eyes.

Once the selected pixels are turned opaque to cast a shadow on the driver's face, the camera or other sensor can detect the presence of the shadow on the driver's face to assure the shadow aligns with the detected location of the driver's eyes.

The above description of a facial recognition model to detect the presence and location of driver's eyes is but one example. Other facial recognition models exist and can be implemented to perform similar functions of detecting the location of the driver's eyes, the location and intensity of the sunlight, and darkening a corresponding region of the screen 14 such that the sunlight can pass through the screen 14 at locations other than those that would travel directly to the driver's eyes.

Once certain pixels 32 are controlled to be opaque, the camera 22 and associated image data 28 can be utilized to check the accuracy of the system. For example, the storage 26 can be provided with a shadow-detection instructions that, when executed by processor 30, cause the processor to analyze the image data to look for shadows. For example, as shown in Figure 4B, shadows may appear within boundary box 52. If the camera and associated instructions detect the shadow as not overlapping with the detected location of the driver's eyes, the screen 14 can be adjusted such that a different group of pixels can be commanded to be opaque such that the shadow overlaps with the detected location of the driver's eyes. This function can act as a closed-loop system to assure the shadows cast by the opaque pixels are located on the driver's eyes.

Instead of, or in addition to, the camera 22, a thermal sensor may be utilized. In such an embodiment, the thermal camera can detect heat coming from the driver's head, and a corresponding control algorithm or machine learning system can detect the presence and location of the user's head, along with the presence and location of the user's eyes based on the heat signatures from the thermal camera.

Continuous operation of the virtual visor system 10 can consume power at unnecessary times. The facial recognition model 44 may be one of several controls utilized in order to cast a shadow on the eye region of the driver's face. In addition to, or as part of, the facial recognition model, face alignment, 3D face reconstruction, estimation of sunlight direction facial shadow estimation, mapping from facial shadow to visor location, and other controls may be utilized. Detection of the driver's face and eyes via the aforementioned camera or sensors, along with the corresponding control algorithms and processing of the images obtained by the camera, can run at a high frequency (e.g., 10-30 Hz), thereby demanding a relatively large amount of power to operate. Determining the conditions in which the virtual visor system 10 is to be deployed can be extremely beneficial for reducing the power consumption of the system. For example, if conditions warrant the virtual visor system 10 be dormant or otherwise not actively working, power can be saved.

According to various embodiments of this disclosure, portions of the virtual visor system 10 are configured to be disabled when not needed, as indicated by certain triggers detected by one or more monitors (e.g., sensors). One or more intermittent on-board monitors independent of external connection can provide the triggers to control the operation of the screen 14 and perform calibration checks. The monitors may be operated at a lower frequency (e.g., lower than the high frequency explained above), thereby consuming less power than the overall control algorithms described earlier for controlling the pixels 32 of the screen 14. The monitors can be configured by the user while the parameters of the visor control algorithms may not be exposed to the user. For instance, if a user still wants to use the virtual visor while wearing sunglasses, the user can simply turn off the sunglasses monitor. The triggers can be provided to indicate certain scenarios in which use of opaque areas on the virtual visor would be unnecessary. For example, if it determined that it is dark outside, or raining, or the driver is wearing sunglasses, the facial recognition models and other steps of processing the image data from the camera may cease to save energy demands. Also, the transition of the pixels from opaque to transparent can likewise cease. The pixels 32 can be placed and maintained in the transparent mode until the trigger from the monitors is removed or absent.

Figure 5 illustrates an exemplary flow chart of various monitors configured to output a trigger to interrupt the virtual visor control and place the virtual visor system in a low-power or sleep mode. One or more of these monitors may be present in the system. In one embodiment, a weather monitor 60 is provided. On an overcast day, the operation of the virtual visor screen 14 likely does not bring improvement to the driver experience. Hence, disabling the virtual visor during these conditions can save power by, for example, disabling the control.

The weather monitor 60 can include one or more environmental sensors, such as environmental sensor 34. In an embodiment, multiple environmental sensors are utilized. As an example, the weather monitor 60 may be performed by the processor 30 (or another processor) and may receive, as input, data from one or more of a variety of sensors such as an ambient light sensor, a rain sensor, an ambient temperature sensor, and the like. A sensor fusion algorithm can be used to combine the measurements from different sensors to estimate the current weather conditions. For example, in certain situations, one sensor alone may not be reliable. It may therefore be desirable to combine different sensors to obtain a robust measurement. One possible way is a decision-level fusion, where each sensor outputs a respective decision, and the algorithm then combines the decisions based on a majority voting strategy. Another possible way is a score-level fusion, where each sensor outputs a score (e.g., volume, voltage, probability) and these scores are fused using learning-based methods (e.g., regression). The weather monitor 60 can also receive locational information from the vehicle's global positioning system (GPS), and current weather parameters for the present location from an off-board sensor wirelessly communicating with the vehicle.

In any of these embodiments, the detected or estimated weather is used to determine what control state the virtual visor system 10 should operate in. For example, if the weather monitor indicates that there is currently inclement weather (e.g., cloud cover, rain, etc.) then the virtual visor system 10 can be deactivated or in a low-power mode. In some embodiments, the screen 14 can be placed in a transparent mode and held in such a mode until the weather monitor 60 indicates the weather has improved, removing the trigger condition for interrupting the control of the virtual visor system 10.

In an embodiment, a sunglasses monitor 62 may be provided. When the driver is wearing sunglasses, the use of the virtual visor system 10 may not provide any useful benefit to the driver. To determine whether the driver is wearing sunglasses, the sunglasses monitor may access the facial recognition model described above. In particular, once a face is detected, similar methods (e.g., machine learning, deep neural network in a pre-trained fashion) may be employed to determine whether or not there are sunglasses present on the detected face. If it is determined that the driver is wearing sunglasses, the screen 14 can be placed in a transparent mode and held in such a mode until the sunglasses monitor 62 clears the trigger condition (e.g., the driver is no longer detected to be wearing sunglasses) for interrupting the control of the virtual visor. During calibration of the sunglasses monitor, the driver can be requested to remove sunglasses before initializing the system.

In an embodiment, a day/night monitor 64 may be provided. During night, the operation of the sun visor is likely not useful, and therefore the power flow to the virtual visor system can be interrupted (or the power used by the system can be reduced) to save power as described herein. The day/night monitor 64 may include an environmental sensor 34 in the form of an ambient light sensor configured to detect the amount of light outside the vehicle. The day/night monitor 64 may also gain access to the current day and time, and optionally the current location and access a look-up table that matches the time of day and the location to the current position of the sun, or time of sunset or darkness in which a visor would not provide benefits. These points can be calibrated into the system.

As previously explained, an incident light sensor may be utilized for control of the screen 14. In an embodiment, the incident light sensor detects a location and magnitude of a light source (e.g., the sun, other vehicle's headlights, etc.) The processor can then control the opaqueness of regions of the screen 14 based on the incident light. For example, the overall ambient light might be below a threshold, which might indicate that it is night outside and the visor may be deactivated to save power usage. However, if the incident light sensor determines that an incident light is above a threshold even though the overall ambient light is below a corresponding threshold, the active control of the screen 14 may still be provided. For example, it may be near dawn or dusk outside, with the overall ambient light not relatively large, yet the incident light sensor may detect the directly sunlight exceeding a threshold that may interfere with the driver's vision. Therefore, the screen 14 may be controlled to turn corresponding pixels opaque to block out the direct sunlight even though ambient light is below a threshold. In another embodiment, it may be dark or night time in which the ambient light is far below a corresponding threshold which might otherwise cease the active control of the screen to save power according to the teachings herein. However, bright headlights (e.g., high beams) from an oncoming vehicle may interfere with the driver's vision. Therefore, the screen 14 may actively be controlled if the incident light sensor determines that the high beams are in a location that may interfere with the driver's vision, and turn corresponding pixels of the screen 14 opaque.

The monitors 60-64 are merely exemplary ways of determining whether the use of the virtual visor system 10 would not provide benefit to the driver. It should be understood that other monitors 66 can also be provided to work along with monitors 60-64 or as standalone monitors. In one embodiment, the other monitors 66 includes a switch that determines whether the screen 14 or surrounding visor is folded down or up. If the screen 14 is folded up against the inner roof of the vehicle in a storage position, the virtual visor control can be disabled. If, the screen 14 is folded down away from the inner roof of the vehicle in a use position (e.g., between the driver's eyes and a portion of the windshield), then the virtual visor control can be enabled (e.g., the controller can control the pixels 32). The switch to determine the position of the screen 14 can be a physical proximity switch or the like.

If any of the above monitors 60-66 output a signal indicating a trigger of said monitor, the control of the virtual visor can be disabled at 68. In other words, if the weather monitor 60 indicates inclement weather, or the sunglasses monitor 62 indicates the driver is wearing sunglasses, or if the day/night monitor 64 indicates it is night time, or if the other monitors 66 output a similar signal, the virtual visor system 10 can be placed "off' at 68. If placed in the "off' mode, the system can be in a low-power mode, wherein certain structure such as the camera 22 and pixels 32 are not activated. This can reduce the overall power consumption of the system 10. Alternatively, this may simply implement a kill switch (either hardware-based or software-based) to shutdown the system 10 until the monitors 60-66 indicate the absence of the trigger (e.g., the weather has improved, the driver has taken off his/her sunglasses, etc.). The ability to control the screen 14, as represented by the virtual visor control 70, may be carried out by the processor or controller 30 described herein. For example, the processor or controller 30 can disable the operation of the controls and analysis described herein (e.g., face detection, face alignment, face reconstruction, shadow estimation, light direction estimation, etc.), and place all of the pixels in a constant state such as the transparent mode. As these controls and analyses consume relatively large amounts of power, power is saved by not running these.

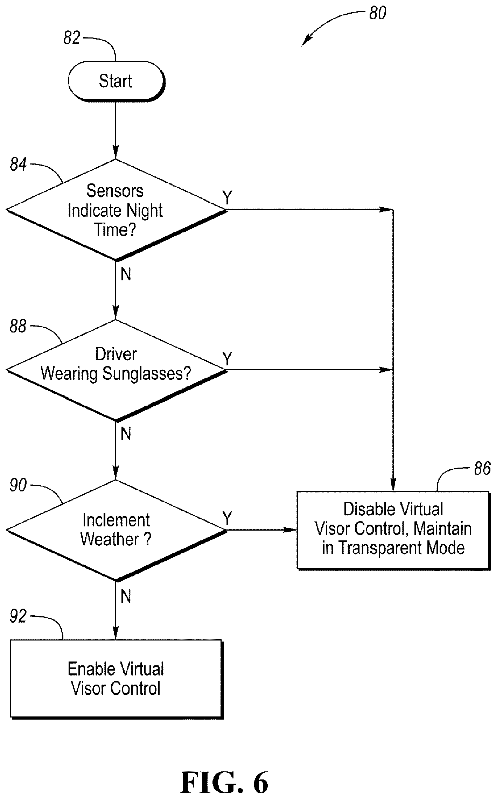

Figure 6 illustrates an example of a system or method 80 for reducing power demands of the virtual visor system by using the monitors explained herein. The system or method can be executed by the processor 30, for example. The method starts at 82. At 84, the processor determines whether one or more sensors indicate that it is night time. In other words, the output of the day/night monitor 64 is accessed. If the sensors do indeed indicate that it is night time, then at 86 the controller 30 disables the virtual visor control to reduce power demands, and maintains the screen 14 in a transparent mode. In some embodiments, such as certain LCD screens, the elimination of power to the screen 14 may cause the pixels to be opaque, and thus the screen 14 would be maintained in an opaque mode at 86.

If the sensors do not indicate that it is night time (e.g., it is daylight outside), then the processor determines whether the driver is wearing sunglasses at 88. In other words, the output of the sunglasses monitor 62 is accessed. If the sensors determine that the driver is wearing sunglasses, the virtual visor control is disabled at 86.

If the driver is not wearing sunglasses, the method advances to 90 in which the processor accesses the output of the weather monitor 60 to determine whether there are conditions that indicate inclement weather outside the vehicle, such as rain, cloud cover, etc. If there is inclement weather, the virtual visor control is disabled at 86 to reduce power demands.

If the various monitors 60-66 all do not output signals indicating the screen 14 would not be beneficial for the driver, then the method proceeds to 92 in which the virtual visor system 10 is allowed to operate normally, e.g., able to control the pixels to be in either the transparent mode or the opaque mode.

It should be understood that the steps shown in Figure 6 are merely one illustrative embodiment. In other embodiments, the order of the steps 84-90 are rearranged or modified. Certain steps can be placed ahead of others for priority.

While embodiments described herein show the virtual visor system implemented in an automotive vehicle, the teachings of this disclosure can also be applied in other visor settings. For example, the systems described herein can be applied to aircraft to help reduce sun glare or direct sunlight on the pilot's eyes. Also, the systems described herein can be applied to helmets, such as motorcycle helmets. These helmets typically have one or more fold-down visors or shields, and the technology of this disclosure can be implemented into one of those visors.

While one processor 30 is illustrated, it should be understood that references to "a processor" can include one or more processors. In certain embodiments, it may be advantageous or appropriate to include multiple processors that communicate with designated hardware and sensory equipment, but nonetheless are either individually or collectively capable of performing the actions described herein.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the scope of the invention as defined by the appended claims.

## Claims

1. A system (10) for reducing power consumption of a virtual visor within a vehicle, the system comprising:
a camera (22) configured to capture images of a face of a driver (18);
a visor screen (14) having a plurality of liquid crystal display, LCD, pixels, each LCD pixel configured to (i) in an opaque state, block light from passing through a corresponding area of the visor screen (14), and (ii) in a transparent state, allow light to pass through the corresponding area of the visor screen (14);
one or more monitors configured to monitor an environment inside or outside of the vehicle and output a trigger signal indicating a reduced need for the LCD pixels to be in the opaque state based on the monitored environment; and
a processor (30) configured to:
process the captured images and select a group of the LCD pixels to transition between the transparent state and the opaque state based on the processed captured images, and
in response to the trigger signal being output by the one or more monitors, cease the processing of the captured images and maintain the LCD pixels in the transparent state,
**characterized in that** the camera (22) is further configured to detect an orientation of eyes of the driver (18), wherein the processor (30) is further configured to select which group of the LCD pixels to transition to the opaque state based on the detected orientation of the eyes, and wherein, when one of the monitors being a sunglasses monitor (62) determines that the driver is wearing sunglasses, the trigger signal is provided to indicate the use of opaque areas on the visor screen (14) is unnecessary.

2. The system (10) of claim 1, wherein the one or more monitors sample data at a first frequency, and the processor (30) is configured to process the captured images at a second frequency that is greater than the first frequency.

3. The system (10) of claim 1, wherein the one or more monitors sample data at a first frequency, and the processor (30) is configured to select which group of the LCD pixels to transition to the opaque state at a second frequency that is greater than the first frequency.

4. The system (10) of claim 1, wherein the processor (30) is further configured to maintain all of the LCD pixels in the transparent state until the one or more monitors no longer outputs the signal.

5. The system (10) of claim 1, wherein the one or more monitors includes an environmental sensor (34) configured to output the signal in response to rain on the windshield or amount of ambient light being below an ambient-light threshold.

6. The system (10) of claim 5, wherein the environmental sensor includes an incident light sensor configured to determine a location and magnitude of incident light, and the processor is configured to, in response to the incident light exceeding an incident-light threshold while the ambient light is below the ambient-light threshold, continue to process the captured images and select the group of the LCD pixels to transition between the transparent state and the opaque state based on the processed captured images.

7. A method of controlling a virtual visor of a vehicle, the method comprising:
capturing images of a face of a driver (18) from a camera (22);
performing facial recognition on the captured images to determine a location and an orientation of eyes of the driver (18);
transitioning a group of LCD pixels of the virtual visor from a transparent state to an opaque state based on the determined location of the eyes to block at least some sunlight from traveling into the eyes;
monitoring an environment inside or outside of the vehicle via one or more sensors;
receiving a trigger signal based on the monitored environment that indicates a reduced need for the LCD pixels to be in the opaque state; and
disabling the step of performing facial recognition in response to receiving the trigger signal,
**characterized in that**
the group of the LCD pixels to transition to the opaque state is selected further based on the detected orientation of the eyes, and wherein, when one of the monitors being a sunglasses monitor (62) determines that the driver is wearing sunglasses, the trigger signal is provided to indicate the use of opaque areas on the visor screen (14) is unnecessary.

8. The method of claim 7, further comprising:
maintaining all of the LCD pixels of the virtual visor in the transparent state until the trigger signal is no longer received.

9. The method of claim 7, wherein the step of monitoring the environment includes sensing an amount of ambient light.

10. The method of claim 7, wherein the step of monitoring the environment includes processing the captured images to determine that the driver is wearing sunglasses.

11. The method of claim 7, wherein the step of monitoring the environment includes determining the location of the vehicle via GPS and determining current weather conditions of the location of the vehicle.

12. The method of claim 7, wherein the step of performing facial recognition is performed by a processor at a first frequency, and wherein the step of monitoring is performed by the one or more sensors at a second frequency that is less than the first frequency.

13. A non-transitory computer-readable medium having stored thereon instructions to cause the device of claim 1 to execute the steps of the method of claim 7 that, when executed by at least one processor (30), cause the at least one processor (30) to perform operations comprising:
operate a camera (22) to capture images of a face of a driver (18) of a vehicle;
process the captured images to determine a location and an orientation of eyes of the driver (18);
based on the determined location of the eyes, command a group of LCD pixels of a virtual visor screen (14) to switch between (i) a transparent state to allow light to transmit through a corresponding area of the virtual visor screen (14), and (i) an opaque state to block light from transmitting through the corresponding area of the virtual visor screen (14);
operate one or more sensors to monitor an environment inside or outside of the vehicle; and
cease the processing of the captured images in response to the monitored environment indicating a reduced need for the LCD pixels to be in the opaque state,
**characterized in that**
the group of the LCD pixels to transition to the opaque state is selected further based on the detected orientation of the eyes and wherein, when one of the monitors being a sunglasses monitor (62) determines that the driver is wearing sunglasses, the trigger signal is provided to indicate the use of opaque areas on the visor screen (14) is unnecessary.

14. The non-transitory computer-readable medium of claim 13, wherein the non-transitory computer-readable medium is configured to store further instructions that, when executed by the at least one processor (30), cause the at least one processor (30) to:
maintain all of the LCD pixels of the virtual visor screen in the transparent state in response to the monitored environment indicating a reduced need for the LCD pixels to be in the opaque state.

15. The non-transitory computer-readable medium of claim 14, wherein the non-transitory computer-readable medium is configured to store further instructions that, when executed by the at least one processor (30), cause the at least one processor (30) to:
resume the processing of the captured images in response to the monitored environment no longer indicating the reduced need for the LCD pixels to be in the opaque state.

16. The non-transitory computer-readable medium of claim 13, wherein the one or more sensors includes an ambient light sensor, and wherein the ceasing of the processing of the captured images is performed in response to the ambient light sensor indicating a magnitude of ambient light below a threshold.

17. The non-transitory computer-readable medium of claim 13, wherein the ceasing of the processing of the captured images is performed in response to the camera and one of the at least one processor (30) detecting the driver to be wearing sunglasses.

18. The non-transitory computer-readable medium of claim 13, wherein the ceasing of the processing of the captured images is performed in response to the at least one processor (30) determining inclement weather outside of the vehicle.

19. The non-transitory computer-readable medium of claim 13, wherein the non-transitory computer-readable medium is configured to store further instructions that, when executed by the at least one processor (30), cause the at least one processor (30) to:
output a trigger signal from the one or more sensors in response to changes in the environment inside or outside of the vehicle, wherein the cease the processing of the captured images in response to the trigger signal.

## Patentansprüche

1. System (10) zum Reduzieren eines Energieverbrauchs in einem virtuellen Visor innerhalb eines Fahrzeugs, wobei das System umfasst:
eine Kamera (22), die konfiguriert ist, um Bilder von einem Gesicht eines Fahrers (18) zu erfassen;
einen Visorbildschirm (14), der eine Mehrzahl von Pixeln einer Flüssigkristallanzeige (LCD-Pixeln) aufweist, wobei jedes LCD-Pixel konfiguriert ist zum (i) in einem undurchlässigen Zustand, Verhindern, dass Licht einen entsprechenden Bereich des Visorbildschirms (14) durchläuft, und (ii) in einem transparenten Zustand, Erlauben, dass Licht den entsprechenden Bereich des Visorbildschirms (14) durchläuft;
einen oder mehrere Monitore, die konfiguriert sind zum Überwachen einer Umgebung innerhalb oder außerhalb des Fahrzeugs und zum Ausgeben eines Triggersignals, das für die LCD-Pixel eine reduzierte Notwendigkeit anzeigt, dass sie sich basierend auf der überwachten Umgebung in dem undurchlässigen Zustand befinden; und
einen Prozessor (30), der konfiguriert ist zum:
Verarbeiten der erfassten Bilder und Auswählen einer Gruppe der LCD-Pixel, um basierend auf den verarbeiteten erfassten Bildern zwischen dem transparenten Zustand und dem undurchlässigen Zustand zu wechseln, und
als Reaktion darauf, dass das Triggersignal von dem einen oder den mehreren Monitoren ausgegeben wird, Unterbrechen des Verarbeitens, der erfassten Bilder und Belassen der LCD-Pixel in dem transparenten Zustand;
**dadurch gekennzeichnet, dass**
die Kamera (22) ferner konfiguriert ist zum Erkennen einer Ausrichtung der Augen des Fahrers (18), wobei der Prozessor (30) ferner konfiguriert ist zum Auswählen, welche Gruppe der LCD-Pixel basierend auf der erkannten Ausrichtung der Augen in den undurchlässigen Zustand wechselt, und wobei, wenn einer der Monitore, der ein Sonnenbrillenmonitor ist (62), ermittelt, dass der Fahrer eine Sonnenbrille trägt, das Triggersignal bereitgestellt wird, um anzuzeigen, dass die Verwendung von undurchlässigen Bereichen auf dem Visorbildschirm (14) unnötig ist.

2. System (10) nach Anspruch 1, wobei der eine oder die mehreren Monitore, Daten mit einer ersten Frequenz abtasten, und wobei der Prozessor (30) konfiguriert ist, um die erfassten Bilder mit einer zweiten Frequenz zu verarbeiten, die größer als die erste Frequenz ist.

3. System (10) nach Anspruch 1, wobei der eine oder die mehreren Monitore, Daten mit einer ersten Frequenz abtasten, und wobei der Prozessor (30) konfiguriert ist, um auszuwählen, welche Gruppe der LCD-Pixel mit einer zweiten Frequenz, die größer als die erste Frequenz ist, in den undurchlässigen Zustand wechselt.

4. System (10) nach Anspruch 1, wobei der Prozessor (30) ferner konfiguriert ist, um alle LCD-Pixel in dem transparenten Zustand zu belassen, bis der eine oder die mehreren Monitore das Signal nicht mehr ausgeben.

5. System (10) nach Anspruch 1, wobei der eine oder die mehreren Monitore einen Umweltsensor (34) beinhaltet, der konfiguriert ist zum Ausgeben des Signals als Reaktion auf Regen auf der Windschutzscheibe oder darauf, dass eine Menge an Umgebungslicht unter einem Umgebungslichtschwellenwert liegt.

6. System (10) nach Anspruch 5, wobei der Umweltsensor einen Lichteinfallsensor beinhaltet, der konfiguriert ist, um einen Ort und eine Stärke eines Lichteinfalls zu ermitteln, und wobei der Prozessor konfiguriert ist, um als Reaktion darauf, dass der Lichteinfall einen Lichteinfallsschwellenwert überschreitet, während das Umgebungslicht niedriger als der Umgebungslichtschwellenwert ist, das Verarbeiten der erfassten Bilder fortzusetzen und um die Gruppe von LCD-Pixeln auszuwählen, die basierend auf den verarbeiteten erfassten Bildern zwischen dem transparenten Zustand und dem undurchlässigen Zustand wechselt.

7. Verfahren zum Steuern eines virtuellen Visors eines Fahrzeugs, wobei das Verfahren umfasst:
Erfassen von Bildern eines Gesichts eines Fahrers (18) durch eine Kamera (22);
Durchführen einer Gesichtserkennung in den erfassten Bildern, um einen Ort und eine Ausrichtung der Augen des Fahrers (18) zu ermitteln;
Wechseln einer Gruppe von LCD-Pixeln des virtuellen Visors von einem transparenten Zustand zu einem undurchlässigen Zustand basierend auf dem ermittelten Ort der Augen, um mindestens einen Teil des Sonnenlichts zu blockieren, damit er nicht in das Auge eindringt;
Überwachen einer Umgebung innerhalb und außerhalb des Fahrzeugs durch einen oder mehrere Sensoren;
Empfangen, basierend auf der überwachten Umgebung, eines Triggersignals, das eine reduzierte Notwendigkeit dafür anzeigt, dass sich die LCD-Pixel in dem undurchlässigen Zustand befinden; und
Deaktivieren des Schritts eines Durchführens einer Gesichtserkennung als Reaktion auf ein Empfangen des Triggersignals,
**dadurch gekennzeichnet, dass**
die Gruppe von LCD-Pixeln, die in den undurchlässigen Zustand wechselt, ferner basierend auf der erkannten Ausrichtung der Augen ausgewählt wird, und wobei, wenn einer der Monitore, der ein Sonnenbrillenmonitor ist (62), ermittelt, dass der Fahrer eine Sonnenbrille trägt, das Triggersignal bereitgestellt wird, um anzuzeigen, dass die Verwendung von undurchlässigen Bereichen auf dem Visorbildschirm (14) unnötig ist.

8. Verfahren nach Anspruch 7, das ferner umfasst:
Belassen aller LCD-Pixel des virtuellen Visors in dem transparenten Zustand, bis das Triggersignal nicht mehr empfangen wird.

9. Verfahren nach Anspruch 7, wobei der Schritt des Überwachens der Umgebung ein Erfassen einer Stärke eines Umgebungslichts beinhaltet.

10. Verfahren nach Anspruch 7, wobei der Schritt des Überwachens der Umgebung ein Verarbeiten der erfassten Bilder beinhaltet, um zu ermitteln, dass der Fahrer eine Sonnenbrille trägt.

11. Verfahren nach Anspruch 7, wobei der Schritt des Überwachens der Umgebung ein Ermitteln des Orts des Fahrzeugs über GPS und ein Ermitteln der aktuellen Wetterbedingungen des Orts des Fahrzeugs beinhaltet.

12. Verfahren nach Anspruch 7, wobei der Schritt des Durchführens einer Gesichtserkennung durch einen Prozessor mit einer ersten Frequenz durchgeführt wird, und wobei der Schritt des Überwachens durch den einen oder die mehreren Sensoren mit einer zweiten Frequenz durchgeführt wird, die geringer als die erste Frequenz ist.

13. Nicht-flüchtiges computerlesbares Medium, in dem Anweisungen gespeichert sind, um die Vorrichtung nach Anspruch 1 zu veranlassen, die Schritte des Verfahrens nach Anspruch 7 auszuführen, die wenn sie von dem mindestens einen Prozessor (30) ausgeführt werden, den mindestens einen Prozessor (30) veranlassen, Operationen durchzuführen, die umfassen:
Betreiben einer Kamera (22), um Bilder von einem Gesicht eines Fahrers (18) eines Fahrzeugs zu erfassen;
Verarbeiten der erfassten Bilder, um einen Ort und eine Ausrichtung der Augen des Fahrers (18) zu ermitteln;
basierend auf dem ermittelten Ort der Augen, Befehlen einer Gruppe von LCD-Pixeln eines virtuellen Visorbildschirms (14), um umzuschalten zwischen (i) einem transparenten Zustand, um zu erlauben, dass Licht durch einen entsprechenden Bereich des virtuellen Visorbildschirms (14) übertragen wird, und (ii) einem undurchlässigen Zustand, um zu verhindern, dass Licht durch den entsprechenden Bereich des virtuellen Visorbildschirms (14) übertragen wird;
Betreiben eines oder mehrerer Sensoren zum Überwachen einer Umgebung innerhalb und außerhalb des Fahrzeugs; und
Unterbrechen des Verarbeitens der erfassten Bilder als Reaktion auf die überwachte Umgebung, die eine reduzierte Notwendigkeit anzeigt, dass sich die LCD-Pixel in dem undurchlässigen Zustand befinden;
**dadurch gekennzeichnet, dass**
die Gruppe von LCD-Pixeln, die in den undurchlässigen Zustand wechselt, ferner basierend auf der erkannten Ausrichtung der Augen ausgewählt wird, und wobei, wenn einer der Monitore, der ein Sonnenbrillenmonitor ist (62), ermittelt, dass der Fahrer eine Sonnenbrille trägt, das Triggersignal bereitgestellt wird, um anzuzeigen, dass die Verwendung von undurchlässigen Bereichen auf dem Visorbildschirm (14) unnötig ist.

14. Nicht-flüchtiges computerlesbares Medium nach Anspruch 13, wobei das nicht-flüchtige computerlesbare Medium konfiguriert ist zum Speichern von weiteren Anweisungen, die, wenn sie von dem mindestens einen Prozessor (30) ausgeführt werden, den mindestens einen Prozessor (30) veranlassen zum:
Belassen aller LCD-Pixel des virtuellen Visorbildschirms in dem transparenten Zustand als Reaktion auf die überwachte Umgebung, die eine reduzierte Notwendigkeit anzeigt, dass sich die LCD-Pixel in dem undurchlässigen Zustand befinden.

15. Nicht-flüchtiges computerlesbares Medium nach Anspruch 14, wobei das nicht-flüchtige computerlesbare Medium konfiguriert ist zum Speichern von weiteren Anweisungen, die, wenn sie von dem mindestens einen Prozessor (30) ausgeführt werden, den mindestens einen Prozessor (30) veranlassen zum:
Wiederaufnehmen des Verarbeitens der erfassten Bilder als Reaktion darauf, dass die überwachte Umgebung nicht länger die reduzierte Notwendigkeit anzeigt, dass sich die LCD-Pixel in dem undurchlässigen Zustand befinden.

16. Nicht-flüchtiges computerlesbares Medium nach Anspruch 13, wobei der eine oder die mehreren Sensoren einen Umgebungslichtsensor beinhalten, und wobei das Unterbrechen des Verarbeitens der erfassten Bilder als Reaktion darauf durchgeführt wird, dass der Umgebungslichtsensor eine Stärke des Umgebungslichts unterhalb eines Schwellenwerts anzeigt.

17. Nicht-flüchtiges computerlesbares Medium nach Anspruch 13, wobei das Unterbrechen des Verarbeitens der erfassten Bilder als Reaktion darauf durchgeführt wird, dass die Kamera und einer des mindestens einen Prozessors (30) erkennen, dass der Fahrer eine Sonnenbrille trägt.

18. Nicht-flüchtiges computerlesbares Medium nach Anspruch 13, wobei das Unterbrechen des Verarbeitens der erfassten Bilder als Reaktion darauf durchgeführt wird, dass der mindestens eine Prozessor (30) schlechtes Wetter außerhalb des Fahrzeugs ermittelt.

19. Nicht-flüchtiges computerlesbares Medium nach Anspruch 13, wobei das nicht-flüchtige computerlesbare Medium konfiguriert ist zum Speichern von weiteren Anweisungen, die, wenn sie von dem mindestens einen Prozessor (30) ausgeführt werden, den mindestens einen Prozessor (30) veranlassen zum:
Ausgeben eines Triggersignals von dem einen oder den mehreren Sensoren als Reaktion auf Veränderungen in der Umgebung innerhalb oder außerhalb des Fahrzeugs, wobei das Unterbrechen des Verarbeitens der erfassten Bilder als Reaktion auf das Triggersignal erfolgt.

## Revendications

1. Système (10) pour réduire la consommation d'énergie d'un viseur virtuel à l'intérieur d'un véhicule, le système comprenant :
une caméra (22) configurée pour capturer des images du visage d'un conducteur (18) ;
un écran de viseur (14) comprenant une pluralité de pixels d'affichage à cristaux liquides, LCD, chaque pixel LCD étant configuré pour (i) dans un état opaque, empêcher la lumière de passer à travers une zone correspondante de l'écran de viseur (14), et (ii) dans un état transparent, permettre à la lumière de passer à travers la zone correspondante de l'écran de viseur (14) ;
un ou plusieurs moniteurs configurés pour surveiller un environnement à l'intérieur ou à l'extérieur du véhicule et délivrer en sortie un signal de déclenchement indiquant une réduction de la nécessité pour les pixels LCD d'être dans l'état opaque en fonction de l'environnement surveillé ; et
un processeur (30) configuré pour :
traiter les images capturées et sélectionner un groupe de pixels LCD pour passer de l'état transparent à l'état opaque sur la base des images capturées traitées, et
en réponse au signal de déclenchement délivrés en sortie par les un ou plusieurs moniteurs, cesser le traitement des images capturées et maintenir les pixels LCD dans l'état transparent,
**caractérisé en ce que**
la caméra (22) est en outre configurée pour détecter l'orientation des yeux du conducteur (18), le processeur (30) étant en outre configuré pour sélectionner le groupe de pixels LCD à faire passer à l'état opaque en fonction de l'orientation détectée des yeux et, lorsque l'un des moniteurs, qui est un moniteur de lunettes de soleil (62), détermine que le conducteur porte des lunettes de soleil, le signal de déclenchement est fourni pour indiquer que l'utilisation de zones opaques sur l'écran du viseur (14) n'est pas nécessaire.

2. Système (10) selon la revendication 1, dans lequel les un ou plusieurs moniteurs échantillonnent des données à une première fréquence, et le processeur (30) est configuré pour traiter les images capturées à une seconde fréquence supérieure à la première fréquence.

3. Système (10) selon la revendication 1, dans lequel les un ou plusieurs moniteurs échantillonnent des données à une première fréquence, et le processeur (30) est configuré pour sélectionner le groupe de pixels LCD à faire passer à l'état opaque à une seconde fréquence supérieure à la première fréquence.

4. Système (10) selon la revendication 1, dans lequel le processeur (30) est en outre configuré pour maintenir tous les pixels LCD dans l'état transparent jusqu'à ce que les un ou plusieurs moniteurs n'émettent plus le signal.

5. Système (10) selon la revendication 1, dans lequel les un ou plusieurs moniteurs comprennent un capteur environnemental (34) configuré pour délivrer en sortie le signal en réponse à la pluie sur le pare-brise ou à la quantité de lumière ambiante inférieure à un seuil de lumière ambiante.

6. Système (10) selon la revendication 5, dans lequel le capteur environnemental comprend un capteur de lumière incidente configuré pour déterminer l'emplacement et l'importance de la lumière incidente, et le processeur est configuré pour, en réponse à la lumière incidente dépassant un seuil de lumière incidente tandis que la lumière ambiante est inférieure au seuil de lumière ambiante, continuer à traiter les images capturées et sélectionner le groupe de pixels LCD pour passer de l'état transparent à l'état opaque sur la base des images capturées traitées.

7. Procédé de commande d'un viseur virtuel d'un véhicule, le procédé comprenant les étapes suivantes :
capturer des images du visage d'un conducteur (18) à partir d'une caméra (22) ;
effectuer une reconnaissance faciale sur les images capturées afin de déterminer l'emplacement et l'orientation des yeux du conducteur (18) ;
faire passer un groupe de pixels LCD du viseur virtuel d'un état transparent à un état opaque en fonction de l'emplacement déterminé des yeux afin d'empêcher au moins une partie de la lumière du soleil de pénétrer dans les yeux ;
surveiller l'environnement à l'intérieur ou à l'extérieur du véhicule à l'aide d'un ou de plusieurs capteurs ;
recevoir un signal de déclenchement basé sur l'environnement surveillé qui indique une réduction de la nécessité pour les pixels LCD d'être dans l'état opaque ; et
désactiver l'étape de reconnaissance faciale en réponse à la réception du signal de déclenchement,
**caractérisé en ce que**
le groupe de pixels LCD devant passer à l'état opaque est sélectionné en outre sur la base de l'orientation détectée des yeux et, lorsque l'un des moniteurs, qui est un moniteur de lunettes de soleil (62), détermine que le conducteur porte des lunettes de soleil, le signal de déclenchement est fourni pour indiquer que l'utilisation de zones opaques sur l'écran du viseur (14) n'est pas nécessaire.

8. Procédé selon la revendication 7, comprenant en outre l'étape suivante :
maintenir tous les pixels LCD du viseur virtuel dans l'état transparent jusqu'à ce que le signal de déclenchement ne soit plus reçu.

9. Procédé selon la revendication 7, dans lequel l'étape de surveillance de l'environnement comprend de détecter une quantité de lumière ambiante.

10. Procédé selon la revendication 7, dans lequel l'étape de surveillance de l'environnement comprend de traiter les images capturées pour déterminer que le conducteur porte des lunettes de soleil.

11. Procédé selon la revendication 7, dans lequel l'étape de surveillance de l'environnement comprend de déterminer l'emplacement du véhicule par GPS et de déterminer les conditions météorologiques en cours correspondant à l'emplacement du véhicule.

12. Procédé selon la revendication 7, dans lequel l'étape de reconnaissance faciale est effectuée par un processeur à une première fréquence, et dans lequel l'étape de surveillance est effectuée par les un ou plusieurs capteurs à une seconde fréquence qui est inférieure à la première fréquence.

13. Support non transitoire lisible par ordinateur sur lequel sont stockées des instructions pour amener le dispositif de la revendication 1 à exécuter les étapes du procédé de la revendication 7 qui, lorsqu'elles sont exécutées par au moins un processeur (30), amènent l'au moins un processeur (30) à exécuter des opérations comprenant les étapes suivantes :
faire fonctionner une caméra (22) pour capturer des images du visage d'un conducteur (18) d'un véhicule ;
traiter les images capturées pour déterminer l'emplacement et l'orientation des yeux du conducteur (18) ;
en fonction de l'emplacement déterminé des yeux, commander un groupe de pixels LCD d'un écran de viseur virtuel (14) pour commuter entre (i) un état transparent pour permettre à la lumière de passer à travers une zone correspondante de l'écran de viseur virtuel (14) et (ii) un état opaque pour empêcher la lumière de passer à travers la zone correspondante de l'écran de viseur virtuel (14) ;
faire fonctionner un ou plusieurs capteurs pour surveiller l'environnement à l'intérieur ou à l'extérieur du véhicule ; et
cesser le traitement des images capturées en réponse à l'environnement surveillé indiquant une réduction du besoin pour les pixels LCD d'être dans l'état opaque,
**caractérisé en ce que**
le groupe de pixels LCD devant passer à l'état opaque est sélectionné en outre sur la base de l'orientation détectée des yeux et, lorsque l'un des moniteurs, qui est un moniteur de lunettes de soleil (62), détermine que le conducteur porte des lunettes de soleil, le signal de déclenchement est fourni pour indiquer que l'utilisation de zones opaques sur l'écran du viseur (14) n'est pas nécessaire.

14. Support non transitoire lisible par ordinateur selon la revendication 13, dans lequel le support non transitoire lisible par ordinateur est configuré pour stocker d'autres instructions qui, lorsqu'elles sont exécutées par l'au moins un processeur (30), amènent l'au moins un processeur (30) à :
maintenir tous les pixels LCD de l'écran de viseur virtuel dans l'état transparent en réponse à l'environnement surveillé indiquant un besoin réduit pour les pixels LCD d'être dans l'état opaque.

15. Support non transitoire lisible par ordinateur selon la revendication 14, dans lequel le support non transitoire lisible par ordinateur est configuré pour stocker d'autres instructions qui, lorsqu'elles sont exécutées par l'au moins un processeur (30), amènent l'au moins un processeur (30) à :
reprendre le traitement des images capturées en réponse à l'environnement surveillé n'indiquant plus un besoin réduit pour les pixels LCD d'être dans l'état opaque.

16. Support non transitoire lisible par ordinateur selon la revendication 13, dans lequel les un ou plusieurs capteurs comprennent un capteur de lumière ambiante, et dans lequel l'arrêt du traitement des images capturées est effectué en réponse au capteur de lumière ambiante indiquant une magnitude de lumière ambiante inférieure à un seuil.

17. Support non transitoire lisible par ordinateur selon la revendication 13, dans lequel l'arrêt du traitement des images capturées est effectué en réponse à la détection par la caméra et l'un des au moins un processeur (30) que le conducteur porte des lunettes de soleil.

18. Support non transitoire lisible par ordinateur selon la revendication 13, dans lequel l'arrêt du traitement des images capturées est effectué en réponse à la détermination, par l'au moins un processeur (30), de mauvais temps à l'extérieur du véhicule.

19. Support non transitoire lisible par ordinateur selon la revendication 13, dans lequel le support non transitoire lisible par ordinateur est configuré pour stocker d'autres instructions qui, lorsqu'elles sont exécutées par l'au moins un processeur (30), amènent l'au moins un processeur (30) à :
délivrer en sortie un signal de déclenchement en provenance des un ou plusieurs capteurs en réponse à des changements dans l'environnement à l'intérieur ou à l'extérieur du véhicule, où le traitement des images capturées est arrêté en réponse au signal de déclenchement.
